# FASCICULE DE BREVET EUROPEEN

(11) **EP 4 096 975 B1**
(45) Date de publication et mention de la délivrance du brevet: **21.02.2024**
(21) Numéro de dépôt: 21700690.7
(22) Date de dépôt: 11.01.2021
(51) Int. Cl.: B60T 11/16, B60R 16/04

(54) **VÉHICULE ÉQUIPÉ D'UN DISPOSITIF D'INTERPOSITION SUR UN MAÎTRE CYLINDRE ENTRE UN MAÎTRE CYLINDRE ET UNE BATTERIE**
FAHRZEUG AUSGESTATTET MIT EINE POLSTERUNG AM HAUPTBREMSZYLINDER ZWISCHEN HAUPTBREMSZYLINDER UND BATTERIE
VEHICLE EQUIPPED WITH AN INTERPOSITION DEVICE ON A MASTER CYLINDER BETWEEN A MASTER CYLINDER AND BATTERY

(30) Priorité: 30.01.2020 FR 2000905
(43) Date de publication de la demande: 07.12.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: CHAILLIE, Frédéric, 78125 La Boissière Ecole (FR); GUIGNARD, Fabrice, 78960 Voisins-le-Bretonneux (FR)
(74) Mandataire: Renault Group
(86) Numéro de dépôt international: PCT/EP2021/050389
(87) Numéro de publication internationale: WO 2021/151642

(56) Documents cités:
- EP-A1- 2 439 111
- EP-A1- 3 578 407
- FR-A1- 2 750 103
- JP-A- 2019 018 782
- US-A1- 2013 330 583

## Description

La présente invention concerne un véhicule doté d'un dispositif d'interposition entre un maitre-cylindre et une batterie électrique. Le document US2013/330583 A1 divulgue une batterie pour un véhicule, avec un plot positif et une couche de protection.

Lors du choc d'un véhicule contre un obstacle extérieur pouvant par exemple être un autre véhicule, la zone avant du véhicule se déforme et les pièces qui sont situées dans le compartiment avant se déplacent. A l'issue d'un tel choc, il faut notamment éviter que le maitre-cylindre, qui est relié la masse, ne vienne toucher le plot positif de la batterie, pour éviter un court-circuit de la batterie.

Une première solution pour empêcher une mise au contact du maitre-cylindre avec le pôle positif de la batterie, consiste à placer une butée de déviation sur ledit maitre-cylindre afin d'empêcher un contact direct entre ces deux éléments dans le cas d'un choc accidentel du véhicule. Or, cette solution nécessite de la place dans le véhicule et ne garantit pas qu'un contact électrique ne puisse se produire ultérieurement entre le maitre-cylindre et le pôle positif de la batterie électrique, bien qu'un contact direct entre ces éléments ait été évité.

Une autre solution consisterait à enrober au moins partiellement le maitre-cylindre avec une couche en matière plastique. Or, la présence d'éléments effilés tels que par exemple un système de type « busbar/vis » au niveau du pôle positif de la batterie, pourrait entrainer un perçage de cette couche ou créer des amorces de fissures, avec pour conséquences une mise au contact électrique du maitre-cylindre avec le pôle positif de la batterie.

Un véhicule selon l'invention est dimensionné de manière à empêcher de façon sûre et fiable, tout contact électrique entre le maitre-cylindre et le pôle positif de la batterie dans le cas d'un choc du véhicule contre un obstacle extérieur.

L'invention a pour objet un véhicule comprenant un maitre-cylindre et une batterie électrique comportant un plot positif.

Selon l'invention, le maitre-cylindre présente une surface extérieure recouverte, sur une surface externe en vis-à-vis du plot positif, par au moins une couche de protection comprenant une sous-couche d'un matériau compressible isolant et une sous-couche d'un matériau résistant à la perforation. La présence de la sous-couche constituée par le matériau compressible isolant permet d'éviter un contact direct entre le maitre-cylindre et le plot positif de la batterie dans le cas d'un choc du véhicule contre un obstacle extérieur. Si un élément saillant du pôle positif de la batterie était susceptible de transpercer cette sous-couche lors dudit choc, la sous-couche constituée par le matériau résistant à la perforation empêcherait cet élément saillant de rentrer en contact avec le maitre-cylindre. Autrement dit, la combinaison de ces deux sous-couches garantit une absence totale de contact entre le maitre-cylindre et le plot positif de la batterie lors d'un choc accidentel du véhicule contre un obstacle extérieur. Il peut être envisagé qu'au moins l'un des deux éléments constitués par le maitre-cylindre et le plot positif soit recouvert par deux, trois ou quatre couches de protection. La notion de « plot positif » désigne, soit directement le plot positif de la batterie, soit toute pièce au contact dudit plot positif. L'objectif recherché par la présence d'au moins une couche de protection sur le maitre-cylindre est, non pas de préserver la géométrie de ceux-ci, mais d'empêcher la création d'un court-circuit. Préférentiellement, la couche de protection est de faible épaisseur et est typiquement inférieure à 15mm, et est préférentiellement inférieure à 10mm. Avantageusement, l'épaisseur de la sous-couche de matériau compressible isolant est supérieure à celle de la sous-couche de matériau résistant à la perforation.

Selon une caractéristique possible de l'invention, le maitre-cylindre est recouvert par un empilement d'au moins deux couches de protection de sorte qu'une sous-couche de matériau compressible isolant se retrouve contre le maitre-cylindre et les autres sous-couches de matériau compressible se retrouvent toujours intercalées entre deux sous-couches de matériau résistant à la perforation. Une telle superposition des sous-couches représente une configuration optimisée permettant à la couche résultante comprenant les couches de protection, d'avoir une efficacité augmentée contre l'apparition d'un court-circuit entre le maitre-cylindre et le plot positif de la batterie.

Selon une caractéristique possible de l'invention, le matériau compressible isolant est à choisir parmi du polypropylène expansé, du caoutchouc, de la fibre de verre et du kevlar. Il s'agit de matériaux légers et particulièrement efficaces vis-à-vis de l'amortissement d'un impact entre le maitre-cylindre et le plot positif de la batterie.

Selon une caractéristique possible de l'invention, le matériau résistant à la perforation est une tôle en acier. Il s'agit d'un matériau léger et courant, présentant de bonnes propriétés contre la perforation.

Préférentiellement, seule la partie dudit maitre-cylindre qui est susceptible d'entrer en contact avec le plot positif de la batterie est recouverte par cette couche de protection. En effet, il n'est pas nécessaire de recouvrir la totalité de la surface extérieure du maitre-cylindre avec la couche de protection pour empêcher l'apparition d'un court-circuit, sous peine notamment d'alourdir inutilement le véhicule.

Selon une caractéristique possible de l'invention, chaque couche de protection présente des extrémités, la sous-couche de matériau compressible isolant étant prolongée par des extensions s'étendant au-delà de la couche de matériau résistant à la perforation au niveau desdites extrémités. En effet, la sous-couche résistant à la perforation et qui peut être réalisée avec un matériau conducteur électrique, peut se plier au niveau de ces extrémités lors de l'impact du maitre-cylindre contre le plot positif de la batterie et venir au contact dudit plot. En prolongeant par des extensions la sous-couche de matériau isolant compressible à ces extrémités, si la couche résistant à la perforation se pliait, elle resterait enfouie dans lesdites extensions sans venir au contact du plot positif de la batterie. Les extensions sont venues de matière avec la sous-couche de matériau compressible isolant si bien qu'elles forment avec ladite sous-couche une pièce monobloc d'un seul tenant.

Selon une caractéristique possible de l'invention, la couche de protection est fixée au maitre-cylindre par au moins deux lanières en plastique entourant ledit maitre-cylindre et ladite couche de protection.

Selon une caractéristique possible de l'invention, la sous-couche de matériau compressible isolant présente au moins une protubérance assimilable à une nervure et le maitre-cylindre présente au moins une fente, la fixation de la couche de protection au maitre-cylindre s'effectuant au moyen d'un coulissement de la protubérance dans la fente. Pour cette configuration, il s'agit d'insérer la nervure par une extrémité dans la fente, puis de faire coulisser la couche de protection le long du maitre-cylindre de façon à ce que la nervure occupe la fente.

Selon une caractéristique possible de l'invention, la protubérance est prolongée par un ergot et la fente présente un évidement, de sorte que le coulissement s'arrête une fois que l'ergot vient se loger dans l'évidement. L'ergot, une fois qu'il est logé dans l'évidement fait office de butée permettant de stopper le coulissement de la nervure dans la fente.

Selon une caractéristique possible de l'invention, la sous-couche de matériau compressible isolant présente une première protubérance arrondie et une deuxième protubérance en angle, le maitre-cylindre présentant une première fente arrondie et une deuxième fente en angle, la fixation de la couche de protection sur le maitre-cylindre s'effectuant au moyen d'une insertion de la première protubérance dans la première fente suivie d'un pivotement de ladite couche de protection relativement au maitre-cylindre jusqu'à l'insertion de la deuxième protubérance dans la deuxième fente permettant à ladite fixation d'être réalisée par encliquetage.

Selon une caractéristique possible de l'invention, au moins une pièce en plastique est encliquetée dans la sous-couche de matériau résistant à la perforation puis est ensuite surmoulée dans la sous-couche de matériau compressible isolant, et une extrémité de ladite pièce en plastique est conçue pour venir se clipper dans un trou du maitre-cylindre.

Un véhicule selon l'invention présente l'avantage d'empêcher l'apparition d'un court-circuit entre le maitre-cylindre et le plot positif de la batterie dans le cas d'un choc du véhicule contre un obstacle extérieur, au moyen d'un simple dépôt sur le maitre-cylindre d'un revêtement spécifique ayant la particularité d'être léger et peu encombrant. Ce revêtement a l'avantage d'être modulable car, en fonction des besoins rencontrés, il peut posséder un nombre variable de couches de protection.

On donne ci-après une description détaillée d'un mode de réalisation préféré d'un véhicule selon l'invention, en se référant aux figures suivantes :
[Fig. 1] représente une vue en perspective d'une batterie électrique de véhicule,
[Fig. 2] représente une vue en perspective d'un maitre-cylindre d'un véhicule,
[Fig. 3] représente une vue en perspective d'un impact du maitre-cylindre de la figure 2 contre le pôle positif de la batterie de la figure 1,
[Fig. 4A] représente une vue en coupe axiale illustrant une première étape d'une interaction entre un maitre-cylindre et un plot positif d'une batterie électrique d'un véhicule existant lors d'un choc dudit véhicule contre un obstacle extérieur,
[Fig. 4B] représente une vue en coupe axiale illustrant une deuxième étape d'une interaction entre un maitre-cylindre et un plot positif d'une batterie électrique d'un véhicule existant lors d'un choc dudit véhicule contre un obstacle extérieur,
[Fig. 4C] représente une vue en coupe axiale illustrant une troisième étape d'une interaction entre un maitre-cylindre et un plot positif d'une batterie électrique d'un véhicule existant lors d'un choc dudit véhicule contre un obstacle extérieur,
[Fig. 5A] représente une vue en coupe axiale illustrant une première étape d'une interaction entre un maitre-cylindre et un plot positif d'une batterie électrique d'un véhicule selon l'invention lors d'un choc dudit véhicule contre un obstacle extérieur,
[Fig. 5B] représente une vue en coupe axiale illustrant une deuxième étape d'une interaction entre un maitre-cylindre et un plot positif d'une batterie électrique d'un véhicule selon l'invention lors d'un choc dudit véhicule contre un obstacle extérieur,
[Fig. 5C] représente une vue en coupe axiale illustrant une troisième étape d'une interaction entre un maitre-cylindre et un plot positif d'une batterie électrique d'un véhicule selon l'invention lors d'un choc dudit véhicule contre un obstacle extérieur,
[Fig. 6] représente une vue en perspective de l'interaction entre un maitre-cylindre et un plot positif d'une batterie électrique d'un véhicule selon l'invention,
[Fig. 7] représente une vue en perspective d'un maitre-cylindre d'un véhicule selon l'invention,
[Fig. 8A] représente une vue en coupe axiale illustrant une pliure d'une extrémité d'une couche de protection d'un maitre-cylindre d'un véhicule selon l'invention,
[Fig. 8B] représente une vue en coupe axiale d'un maitre-cylindre d'un véhicule selon l'invention montrant un allongement de la sous-couche réalisée dans un matériau compressible,
[Fig. 8C] représente une vue en coupe axiale d'un maitre-cylindre d'un véhicule selon l'invention montrant un allongement de la sous-couche réalisée dans un matériau compressible, lors d'un choc du véhicule contre un obstacle extérieur,
[Fig. 9A] représente une vue en perspective d'un premier mode de réalisation d'un maitre-cylindre d'un véhicule selon l'invention,
[Fig. 9B] représente une vue en coupe axiale du premier mode de réalisation de la figure 9A,
[Fig. 10A] représente une vue en coupe axiale d'un deuxième mode de réalisation d'un maitre-cylindre d'un véhicule selon l'invention,
[Fig. 10B] représente une vue en coupe axiale longitudinale du deuxième mode de réalisation de la figure 10A,
[Fig. 11A] représente une vue en coupe axiale d'un troisième mode de réalisation d'un maitre-cylindre d'un véhicule selon l'invention,
[Fig. 11B] représente une vue en coupe axiale du troisième mode de réalisation de la figure 11A en cours de montage,
[Fig. 12] représente une vue en coupe axiale d'un quatrième mode de réalisation d'un maitre-cylindre d'un véhicule selon l'invention,
[Fig. 13] représente une vue en coupe axiale d'un cinquième mode de réalisation d'un maitre-cylindre d'un véhicule selon l'invention,

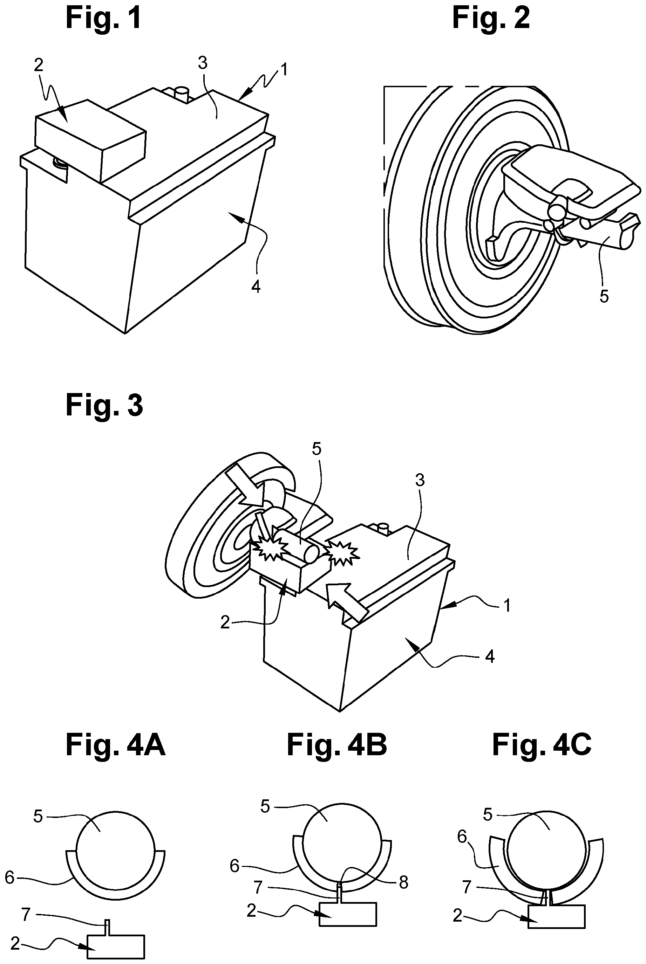

En se référant à la figure 1, une batterie électrique 1 de véhicule automobile comprend un boitier 2 avec fusibles fixé à un plot positif de ladite batterie 1. Ce boitier 2, qui est schématiquement de forme parallélépipédique, est généralement placé sur une face supérieure 3 d'une enveloppe 4 de la batterie 1.

Lors d'un choc frontal du véhicule contre un obstacle extérieur, la zone avant du véhicule se déforme et les pièces situées dans le compartiment avant se déplacent.

En se référant aux figures 2 et 3, parmi les pièces susceptibles de se déplacer lors d'un tel choc, se trouvent la batterie 1 et un maitre-cylindre 5 placé au niveau d'un tablier d'un véhicule, et dont le déplacement risque de provoquer un impact entre ledit maitre-cylindre 5 et le boitier 2 avec fusibles relié électriquement au plot positif de la batterie 1. La conséquence de ce type d'impact est la création d'un arc électrique entre le maitre-cylindre 5 et le boitier 2 avec fusibles.

En se référant aux figures 4A, 4B et 4C, une première solution permettant d'empêcher la création d'un tel arc électrique consiste à recouvrir la zone du maitre-cylindre 5 qui est susceptible de venir au contact du plot positif de la batterie 1 ou du boitier 2 avec fusibles lors d'un choc du véhicule contre un obstacle extérieur, avec une couche 6 en matière plastique. Or, si ledit plot positif ou ledit boitier 2 présentait une extrémité effilée 7 comme illustré à la figure 4A, celle-ci pourrait créer une amorce 8 de fissure en venant au contact de ladite couche 6, comme illustré à la figure 4B. Rien n'empêcherait alors ladite extrémité effilée 7 de venir au contact du maitre-cylindre 5 en passant par ladite amorce 8 de fissure comme illustré à la figure 4C. La mise en oeuvre d'une couche en plastique 6 qui serait déposée sur le maitre-cylindre 5, n'est donc pas suffisante pour garantir de façon certaine une non-mise en contact électrique du plot positif ou du boitier 2 avec fusibles, avec le maitre-cylindre 5.

La solution proposée dans le cadre de la présente invention pour éviter la génération d'un arc électrique entre le maitre-cylindre 5 et le plot positif de la batterie électrique 1 dans le cas d'un choc frontal du véhicule contre un obstacle extérieur, consiste à recouvrir ledit maitre-cylindre 5 par au moins une couche de protection 10 comprenant une première sous-couche 11 d'un matériau compressible isolant et une deuxième sous-couche 12 d'un matériau résistant à la perforation. A titre d'exemple, le matériau compressible isolant est à choisir parmi du polypropylène expansé, du caoutchouc, de la fibre de verre et du kevlar.

A titre d'exemple, le matériau résistant à la perforation peut être représenté par une tôle en acier.

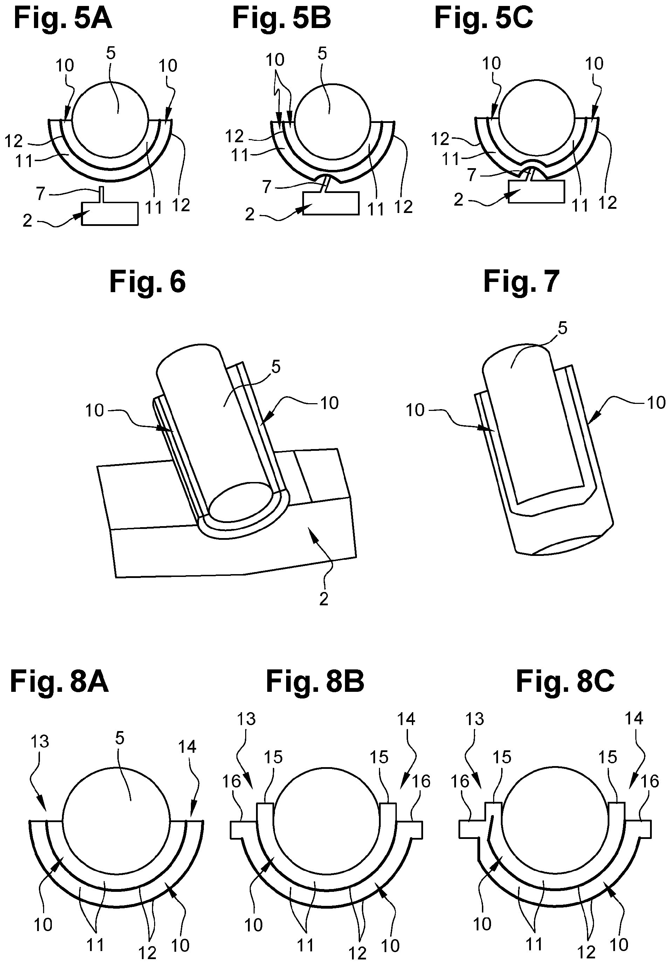

En se référant aux figures 5A, 5B, 5C, 6 et 7, le maitre-cylindre 5 est de forme sensiblement cylindrique et ladite au moins une couche de protection 10 recouvre la moitié dudit maitre-cylindre 5 en ayant une forme sensiblement hémicylindrique. Sur l'exemple illustré sur ces figures, une couche de protection 10 interne et une couche de protection externe 10 superposées l'une sur l'autre, recouvrent la moitié du maitre-cylindre 5, de sorte que la première sous-couche 11 de la couche de protection 10 interne soit au contact du maitre-cylindre 5 et la deuxième sous-couche 12 de ladite couche de protection 10 interne, entoure ladite première sous-couche 11. La couche de protection 10 externe entoure la couche de protection 10 interne de sorte que la première sous-couche 11 de la couche de protection 10 externe entoure la deuxième sous-couche 12 de la couche de protection 10 interne, la deuxième sous-couche 12 de la couche de protection 10 externe entourant la première sous-couche 11 de ladite couche de protection externe 10.

En se référant aux figures 5B et 5C, les premières sous-couches 11 permettent d'amortir le choc entre le maitre-cylindre 5 et le plot positif ou le boitier 2 avec les fusibles en se déformant, et les deuxièmes sous-couches 12 servent de bouclier en empêchant une mise en contact direct du maitre-cylindre 5 avec ledit plot ou ledit boitier 2.

Dans le cas d'un empilement de plusieurs couches de protection, une première sous-couche 11 est toujours encadrée par deux deuxièmes sous-couches 12, à l'exception de la première sous-couche 11 qui est en contact direct avec le maitre-cylindre 5 et qui n'est donc encadrée que par une deuxième sous-couche 12 et ledit maitre-cylindre 5.

Il est à préciser que quel que soit le nombre de couches de protection 10 impliquées, une deuxième sous-couche 12 ne sera jamais en contact direct avec le maitre-cylindre 5 car cette deuxième sous-couche 12 peut être conductrice de courant électrique et pourrait donc créer un arc électrique avec le maitre-cylindre 5 dans le cas d'un choc frontal du véhicule contre un obstacle extérieur.

En se référant aux figures 8A, 8B et 8C, chaque couche de protection 10 hémicylindrique présente une section transversale ayant un profil en demi-cercle possédant deux extrémités libres 13, 14 et diamétralement opposées.

En se référant à la figure 8A, si les premières et les deuxièmes sous-couches 11, 12 arrivaient au même niveau à ces deux extrémités libres, il y aurait un risque non négligeable que les deuxièmes sous-couches 12 se replient au niveau de ces extrémités 13, 14 lors d'une interaction entre le maitre-cylindre 5 et le plot positif ou le boitier 2 avec les fusibles, et viennent au contact du maitre-cylindre 5 en créant un arc électrique redouté.

Afin d'éliminer ce risque, en se référant à la figure 8B, les premières sous-couches 11 sont rallongées à ces deux extrémités 13, 14 de manière à présenter des extensions 15, 16 qui vont déborder des deuxièmes sous-couches 12.

De cette manière, en se référant à la figure 8C, dans le cas d'une interaction accidentelle entre le maitre-cylindre 5 et le plot positif ou le boitier 2 avec les fusibles, les deuxièmes sous-couches 12 vont certes se replier mais vont rester enfouies dans les extensions 15, 16 des premières sous-couches 11, empêchant la création d'un arc électrique.

La fixation des couches de protection 10 sur le maitre-cylindre 5 peuvent s'effectuer de plusieurs manières :

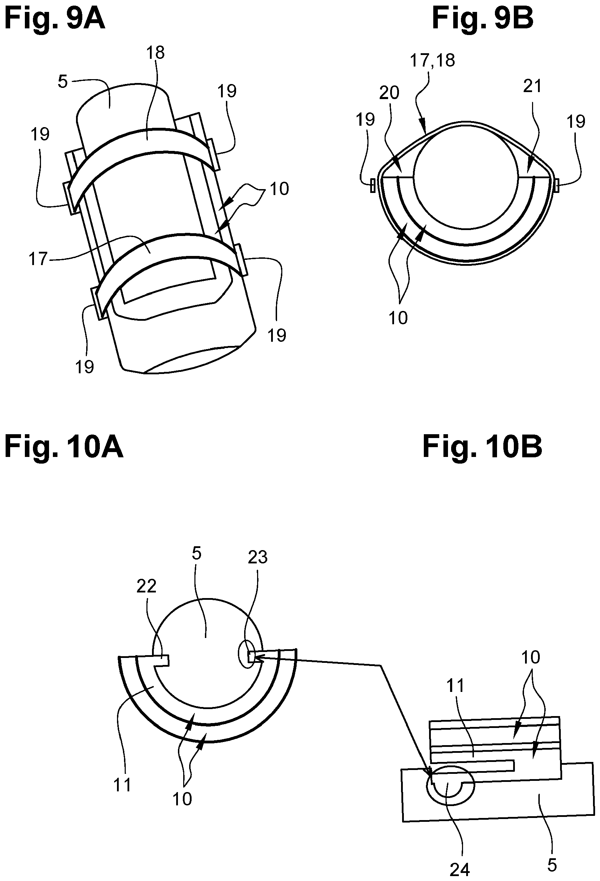

Selon un premier mode de réalisation, en se référant aux figures 9A et 9B, l'empilement de couches de protection 10 est fixé au maitre-cylindre 5 par l'intermédiaire de deux lanières 17, 18 en plastique. Cet empilement présente deux paires d'anneaux 19 saillant dudit empilement, deux anneaux 19 d'une même paire étant placés à une extrémité 20, 21 de la section transversale dudit empilement, et étant alignés suivant un axe longitudinal du maitre-cylindre 5. Chaque anneau 19 d'une paire est aligné sur un anneau 19 de l'autre paire suivant un axe qui est perpendiculaire à un axe longitudinal dudit maitre-cylindre 5, chaque lanière 17, 18 passant dans lesdits deux anneaux 19. Chaque lanière 17, 18 fait une boucle complète et enserre à la fois l'empilement de couches de protection 10 et le maitre-cylindre 5 en venant au contact de ces deux éléments.

Selon un deuxième mode de réalisation, en se référant à la figure 10A, la première sous-couche 11 qui est destinée à venir en contact avec le maitre-cylindre 5 présente deux nervures 22,23 parallèles et diamétralement opposées, lesdites deux nervures 22, 23 s'étendant le long d'un axe longitudinal de ladite première sous-couche 11 et l'une vers l'autre. Le maitre-cylindre 5 présente une surface externe dans laquelle ont été creusées deux fentes parallèles s'étendant le long d'un axe longitudinal dudit maitre-cylindre 5 et l'une vers l'autre. Chaque nervure 22, 23 est introduite à une extrémité d'une fente puis est déplacée par coulissement dans celle-ci.

En se référant à la figure 10B chaque fente comprend un évidement et chaque nervure 22, 23 comporte un ergot 24, le coulissement de chaque nervure 22, 23 dans une fente s'effectuant jusqu'à ce que l'ergot 24 vienne se loger dans l'évidement.

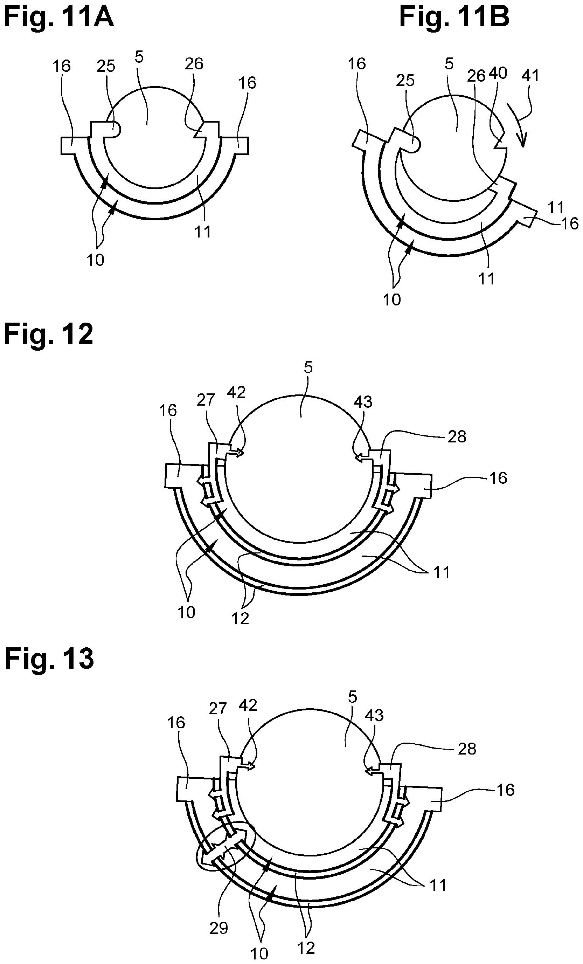

En se référant aux figures 11A et 11B, selon un troisième mode de réalisation, la première sous-couche 11 qui est destinée à venir en contact avec le maitre-cylindre 5 présente une première nervure 25 arrondie et une deuxième nervure 26 en angle sous forme d'un clip, lesdites nervures 25, 26 étant parallèles et diamétralement opposées, lesdites deux nervures 25, 26 s'étendant le long d'un axe longitudinal de ladite première sous-couche 11 et l'une vers l'autre. Le maitre-cylindre 5 présente une surface externe dans laquelle ont été creusées deux fentes parallèles s'étendant le long d'un axe longitudinal dudit maitre-cylindre 5 et l'une vers l'autre, dont une première fente possède un contour arrondi destiné à recevoir la première nervure 25 et dont une deuxième fente 40 possède un contour en angle destiné à recevoir la deuxième nervure 26.

En se référant à la figure 11B, l'empilement de couches de protection 10 est fixé au maitre-cylindre 5 en faisant d'abord pénétrer la première nervure 25 dans la première fente puis en faisant pivoter ledit empilement relativement au maitre-cylindre 5 dans le sens indiqué par la flèche 41, jusqu'à ce que la deuxième nervure 26 vienne s'encliqueter dans la deuxième fente 40.

En se référant à la figure 12, selon un quatrième mode de réalisation, des pièces de fixation 27, 28 sont préalablement encliquetées dans la deuxième sous-couche 12 de l'empilement qui est la plus proche du maitre-cylindre 5, puis sont surmoulées dans les premières sous-couches 11 entourant ladite deuxième sous-couche 12. Ces pièces de fixation 27, 28 présentent des profils leur permettant ensuite d'être encliquetées dans le maitre-cylindre 5.

En se référant à la figure 13, un cinquième mode de réalisation se distingue du quatrième mode de réalisation précédemment décrit en ce que des agrafes 29 en plastique sont encliquetées dans des trous de deux deuxièmes sous-couches 12 consécutives afin de jouer le rôle d'une entretoise entre lesdites deux deuxièmes sous-couches 12, puis sont surmoulés en même temps que les pièces de fixation 27, 28 dans les premières sous-couches 11 entourant lesdites deuxièmes sous-couches 12.

Les cinq modes de réalisation précédemment décrits sont purement illustratifs et ne constituent nullement des limitations dans le cadre de la présente invention.

## Revendications

1. Véhicule comprenant un maitre-cylindre (5) et une batterie électrique (1) comportant un plot positif (2), **caractérisé en ce que** le maitre-cylindre (5) présente une surface extérieure recouverte, sur une surface externe en vis-à-vis du plot positif (2), par au moins une couche de protection (10) comprenant une sous-couche (11) d'un matériau compressible isolant et une sous-couche (12) d'un matériau résistant à la perforation.

2. Véhicule selon la revendication 1, **caractérisé en ce que** le maitre-cylindre (5) est recouvert par un empilement d'au moins deux couches de protection (10) de sorte qu'une sous-couche de matériau compressible (11) isolant se retrouve contre le maitre-cylindre (5) et les autres sous-couches de matériau compressible (11) se retrouvent toujours intercalées entre deux sous-couches (12) de matériau résistant à la perforation.

3. Véhicule selon l'une quelconque des revendications 1 ou 2, **caractérisé en ce que** le matériau compressible isolant est à choisir parmi du polypropylène expansé, du caoutchouc, de la fibre de verre et du kevlar.

4. Véhicule selon l'une quelconque des revendications 1 à 3, **caractérisé en ce que** le matériau résistant à la perforation est une tôle en acier.

5. Véhicule selon la revendication 4, **caractérisé en ce que** chaque couche de protection (10) présente des extrémités (13, 14), et **en ce que** la sous-couche de matériau compressible (11) isolant est prolongée par des extensions (15, 16) s'étendant au-delà de la sous-couche (12) de matériau résistant à la perforation au niveau desdites extrémités (13, 14).

6. Véhicule selon l'une quelconque des revendications 4 ou 5, **caractérisé en ce que** la couche de protection (10) est fixée au maitre-cylindre (5) par au moins deux lanières (17, 18) en plastique entourant ledit maitre-cylindre (5) et ladite couche de protection (10).

7. Véhicule selon l'une quelconque des revendications 4 ou 5, **caractérisé en ce que** la sous-couche (11) de matériau compressible isolant présente au moins une protubérance (22, 23) assimilable à une nervure et le maitre-cylindre (5) présente au moins une fente, et **en ce que** la fixation de la couche de protection (10) au maitre-cylindre (5) s'effectue au moyen d'un coulissement de la protubérance (22, 23) dans la fente.

8. Véhicule selon la revendication 7, **caractérisé en ce que** la protubérance (22, 23) est prolongée par un ergot (24) et la fente présente un évidement de sorte que le coulissement s'arrête une fois que l'ergot (24) vient se loger dans l'évidement.

9. Véhicule selon l'une quelconque des revendications 4 ou 5, **caractérisé en ce que** la sous-couche (11) de matériau compressible isolant présente une première protubérance arrondie (25) et une deuxième protubérance (26) en angle, et **en ce que** le maitre-cylindre (5) présente une première fente arrondie et une deuxième fente (40) en angle, la fixation de la couche de protection (10) sur le maitre-cylindre (5) s'effectuant au moyen d'une insertion de la première protubérance (25) dans la première fente suivie d'un pivotement de ladite couche de protection (10) relativement au maitre-cylindre (5) jusqu'à l'insertion de la deuxième protubérance (26) dans la deuxième fente (40) par encliquetage.

10. Véhicule selon l'une quelconque des revendications 4 ou 5, **caractérisé en ce qu'**au moins une pièce en plastique (27, 28) est encliquetée dans la sous-couche (12) de matériau résistant à la perforation puis est ensuite surmoulée dans la sous-couche (11) de matériau compressible isolant, et **en ce qu'**une extrémité (42, 43) de ladite pièce en plastique (27, 28) est conçue pour venir se clipper dans un trou du maitre-cylindre (5).

## Patentansprüche

1. Fahrzeug, das einen Hauptbremszylinder (5) und eine elektrische Batterie (1) enthält, die einen positiven Anschluss (2) aufweist, **dadurch gekennzeichnet, dass** der Hauptbremszylinder (5) eine Außenfläche aufweist, die auf einer äußeren Fläche gegenüber dem positiven Anschluss (2) mit mindestens einer Schutzschicht (10) bedeckt ist, die eine Teilschicht (11) aus einem komprimierbaren Isoliermaterial und eine Teilschicht (12) aus einem durchstoßfesten Material enthält.

2. Fahrzeug nach Anspruch 1, **dadurch gekennzeichnet, dass** der Hauptbremszylinder (5) von einer Schichtung von mindestens zwei Schutzschichten (10) so bedeckt ist, dass eine Teilschicht aus komprimierbarem Isoliermaterial (11) sich gegen den Hauptbremszylinder (5) befindet und die anderen Teilschichten aus komprimierbarem Material (11) sich immer zwischen zwei Teilschichten (12) aus durchstoßfestem Material eingefügt befinden.

3. Fahrzeug nach einem der Ansprüche 1 oder 2, **dadurch gekennzeichnet, dass** das komprimierbare Isoliermaterial unter expandiertem Polypropylen, Kautschuk, Glasfaser und Kevlar auszuwählen ist.

4. Fahrzeug nach einem der Ansprüche 1 bis 3, **dadurch gekennzeichnet, dass** das durchstoßfeste Material ein Stahlblech ist.

5. Fahrzeug nach Anspruch 4, **dadurch gekennzeichnet, dass** jede Schutzschicht (10) Enden (13, 14) aufweist, und dass die Teilschicht aus komprimierbarem Isoliermaterial (11) durch Verlängerungen (15, 16) ausgedehnt wird, die sich jenseits der Teilschicht (12) aus durchstoßfestem Material im Bereich der Enden (13, 14) erstrecken.

6. Fahrzeug nach einem der Ansprüche 4 oder 5, **dadurch gekennzeichnet, dass** die Schutzschicht (10) durch mindestens zwei Kunststoffriemen (17, 18) am Hauptbremszylinder (5) befestigt ist, die den Hauptbremszylinder (5) und die Schutzschicht (10) umgeben.

7. Fahrzeug nach einem der Ansprüche 4 oder 5, **dadurch gekennzeichnet, dass** die Teilschicht (11) aus komprimierbarem Isoliermaterial mindestens eine mit einer Rippe vergleichbare Vorwölbung (22, 23) aufweist und der Hauptbremszylinder (5) mindestens einen Schlitz aufweist, und dass die Befestigung der Schutzschicht (10) am Hauptbremszylinder (5) mittels eines Gleitens der Vorwölbung (22, 23) im Schlitz erfolgt.

8. Fahrzeug nach Anspruch 7, **dadurch gekennzeichnet, dass** die Vorwölbung (22, 23) von einem Zapfen (24) verlängert wird und der Schlitz eine Aussparung aufweist, so dass das Gleiten endet, wenn der Zapfen (24) sich in die Aussparung einfügt.

9. Fahrzeug nach einem der Ansprüche 4 oder 5, **dadurch gekennzeichnet, dass** die Teilschicht (11) aus komprimierbarem Isoliermaterial eine erste abgerundete Vorwölbung (25) und eine zweite winklige Vorwölbung (26) aufweist, und dass der Hauptbremszylinder (5) einen ersten abgerundeten Schlitz und einen zweiten winkligen Schlitz (40) aufweist, wobei die Befestigung der Schutzschicht (10) am Hauptbremszylinder (5) mittels eines Einführens der ersten Vorwölbung (25) in den ersten Schlitz gefolgt von einem Schwenken der Schutzschicht (10) bezüglich des Hauptbremszylinders (5) bis zum Einführen der zweiten Vorwölbung (26) in den zweiten Schlitz (40) durch Einklinken erfolgt.

10. Fahrzeug nach einem der Ansprüche 4 oder 5, **dadurch gekennzeichnet, dass** mindestens ein Kunststoffbauteil (27, 28) in die Teilschicht (12) aus durchstoßfestem Material eingeklinkt und dann in der Teilschicht (11) aus komprimierbarem Isoliermaterial überformt wird, und dass ein Ende (42, 43) des Kunststoffbauteils (27, 28) konzipiert ist, in ein Loch des Hauptbremszylinder (5) eingeklipst zu werden.

## Claims

1. Vehicle comprising a master cylinder (5) and an electric battery (1) having a positive terminal (2), **characterized in that** the master cylinder (5) has an outer surface covered, on an external surface facing the positive terminal (2), with at least one protective layer (10) comprising a sublayer (11) of an insulating compressible material and a sublayer (12) of a perforation-resistant material.

2. Vehicle according to Claim 1, **characterized in that** the master cylinder (5) is covered with a stack of at least two protective layers (10) such that one sublayer of insulating compressible material (10) is located in contact with the master cylinder (5) and the other sublayers of compressible material (11) are always interposed between two sublayers (12) of perforation-resistant material.

3. Vehicle according to either one of Claims 1 and 2, **characterized in that** the insulating compressible material is chosen from expanded polypropylene, rubber, glass fibre and Kevlar.

4. Vehicle according to any one of Claims 1 to 3, **characterized in that** the perforation-resistant material is a steel sheet.

5. Vehicle according to Claim 4, **characterized in that** each protective layer (10) has ends (13, 14), and **in that** the sublayer of insulating compressible material (11) is continued by extensions (15, 16) that extend beyond the sublayer (12) of perforation-resistant material at said ends (13, 14).

6. Vehicle according to either one of Claims 4 and 5, **characterized in that** the protective layer (10) is fixed to the master cylinder (5) by at least two plastic straps (17, 18) surrounding said master cylinder (5) and said protective layer (10).

7. Vehicle according to either one of Claims 4 and 5, **characterized in that** the sublayer (11) of insulating compressible material has at least one protuberance (22, 23) similar to a rib and the master cylinder (5) has at least one slot, and **in that** the protective layer (10) is fixed to the master cylinder (5) by the protuberance (22, 23) being slid in the slot.

8. Vehicle according to Claim 7, **characterized in that** the protuberance (22, 23) is continued by a lug (24) and the slot has a recess such that sliding stops once the lug (24) is accommodated in the recess.

9. Vehicle according to either one of Claims 4 and 5, **characterized in that** the sublayer (11) of insulating compressible material has a first, rounded protuberance (25) and a second, angled protuberance (26), and **in that** the master cylinder (5) has a first, rounded slot and a second, angled slot (40), the protective layer (10) being fixed to the master cylinder (5) by the first protuberance (25) being inserted into the first slot followed by said protective layer (10) being pivoted relative to the master cylinder (5) until the second protuberance (26) has been inserted into the second slot (40) by snap-fastening.

10. Vehicle according to either one of Claims 4 and 5, **characterized in that** at least one plastic part (27, 28) is snap-fastened in the sublayer (12) of perforation-resistant material and is then overmoulded in the sublayer (11) of insulating compressible material, and **in that** one end (42, 43) of said plastic part (27, 28) is designed to be clip-fastened in a hole in the master cylinder (5).
